Europäisches Patentamt

European Patent Office

Office européen des brevets

(11) Veröffentlichungsnummer: **0 288 684**

**A2**

(12) **EUROPÄISCHE PATENTANMELDUNG**

(21) Anmeldenummer: 88102912.8

(51) Int. Cl.⁴: **A47J 31/057**

(22) Anmeldetag: 26.02.88

(30) Priorität: 30.04.87 DE 8706245 U

(43) Veröffentlichungstag der Anmeldung:
02.11.88 Patentblatt 88/44

(84) Benannte Vertragsstaaten:
CH FR GB IT LI NL SE

(71) Anmelder: ROBERT KRUPS STIFTUNG & CO. KG.
Heresbachstrasse 29
D-5650 Solingen 19(DE)

(72) Erfinder: Lorenz, Horst
Dahler Str. 17
D-5650 Solingen 1(DE)

(74) Vertreter: Buse, Karl Georg, Dipl.-Phys. et al
Patentanwälte Dipl.-Phys. Buse Dipl.-Phys.
Mentzel Dipl.-Ing. Ludewig Unterdörnen 114
D-5600 Wuppertal 2(DE)

(54) **Gerät zum Bereiten heisser Getränke, wie Kaffee, Tee od.dgl.**

(57) Es handelt sich um ein Gerät zum Bereiten heißer Getränke, wie Kaffee, Tee, od.dgl. Dieses Gerät hat ein Gehäuse zur Unterbringung oder Lagerung eines Frischwasserbehälters, einer elektrischen Heizeinrichtung, insbesondere in Form eines Durchlauferhitzers für das Wasser. In dem Gehäuse ist ferner ein Steigrohr zum Weiterleiten des erhitzten Wassers vorgesehen. Unter dem Auslauf des Steigrohres befindet sich ein Filter zur Aufnahme einer Filtertüte für das Kaffeemehl, den Tee od.dgl. Unter den Auslauf des Filters können wahlweise Auffanggefäße, wie ein Glaskrug, eine Thermoskanne od.dgl. aufgestellt werden. Das jeweils benutzte Auffanggefäß wird auf eine Aufstellplatte aufgestellt. Diese ist mit einer elektrischen Heizeinrichtung ausgerüstet. Der elektrischen Heizeinrichtung ist ein den Abstand zwischen ihrer Oberfläche und der Aufstellplatte vergrößernder Distanzhalter zugeordnet, der einen seine Lage in bezug auf die Heizeinrichtung sichernden Halteteil aufweist. Es ist bevorzugt vorgesehen, den Distanz-Halter einen ringförmigen Bereich und einen winklig dazu liegenden geraden Bereich aufweisen zu lassen, an dessen Ende der halteteil angeordnet ist.

FIG.6

## Gerät zum Bereiten heißer Getränke, wie Kaffee, Tee od.dgl.

Die Erfindung bezieht sich auf ein Gerät zum Bereiten heißer Getränke, wie Kaffee, Tee od.dgl., mit einem Gehäuse zur Unterbringung oder Lagerung eines Frischwasserbehälters, einer elektrischen Heizeinrichtung , insbesondere in Form eines Durchlauferhitzers für was Wasser, einem Steigrohr zum Weiterleiten des erhitzten Wassers, einem Filter zur Aufnahme einer Filtertüte für das Kaffeemehl od.dgl. und mit wahlweise zu benutzenden Auffanggefäßen, wie einem Glaskrug, einer Thermoskanne od.dgl., das auf einer Aufstellplatte aufstellbar ist, unterhalb der die elektrische Heizeinrichtung liegt.

Derartige Geräte zum Bereiten heißer Getränke, wie Kaffee, Tee od.dgl. sind in mannigfachen Ausführungsformen bekannt. dabei werden einem solchen Gerät unterschiedlich beschaffene und unterschiedlich ausgebildete Auffanggefäße für den fertigen Kaffee od.dgl. zugeordnet. Dabei ist es in der Praxis üblich, neben Glaskrügen, Prozellankannen und dergl. auch Thermoskannen zum Auffangen des fertigen Heißgetränkes zu benutzen. Diese Auffanggefäße werden dann beim bestimmungs gemäßen Gebrauch des Gerätes auf die Aufstellplatte aufgestellt und ihr Boden kommt dadurch in den Einwirkungsbereich der unterhalb der Aufstellplatte befindlichen elektrischen Heizeinrichtung, beispielsweise eines Durchlauferhitzers. Da - wie erwähnt - die Auffanggefäße auf unterschiedlichen Werkstoffen hergestellt sind, reagieren sie demgemäß auch unterschiedlich auf die dem Boden des jeweiligen Auffanggefäßes zugeführte Wärme. Dabei gibt es Auffanggefäße, die aus solchen Werkstoffen hergestellt sind, welche ohne weiteres die Zufuhr von größeren Wärmemengen vertragen und die Wärme über eine größere Fläche wegen der guten Wärmeleitfähigkeit verteilen. Daher nimmt der untere Teil eines solchen Gefäßes eine verhältnismäßig niedrige Temperatur ein, die ein Aufstellen auf wärmeempfindliche Werkstoffe zuläßt. Bei solchen Geräten kann daher die elektrische Heizung unmittelbar unter der Aufstellplatte angeordnet sein, so daß die Wärme über die meist metallische Aufstellplatte unmittelbar an den Boden des Auffanggefäßes weitergegeben wird.

Daneben sind in der Praxis aber auch Auffanggefäße gebräuchlich, die aus Werkstoffen bestehen, welche die Wärme schlecht leiten. Daher kann es bei ihnen zu erhöhten Temperaturen kommen. Bei diesen Werkstoffen empfiehlt es sich, die Wärmezufuhr zum Boden des Auffanggefäßes zu drosseln, also dem Boden eines solchen Auffanggefäßes nicht so hohe Wärmemengen zuzuführen, daß die Temperatur des Bodens derart ansteigt, daß er beim Aufstellen auf eine wärmeempfindliche Unterlage zu Beschädigungen oder gar zu Zerstörungen dieser Aufstellfläche führt.

Aus den vorstehend genannten Gründen war man bisher bei der Herstellung bzw. dem Zusammenstellen der Geräte zum Zubereiten heißer Getränke, wie Kaffee, Tee od.dgl. darum bemüht, der unterschiedlichen Wärmebelastbarkeit des jeweils benutzten Auffanggefäßes dadurch Rechnung zu tragen, daß man eine mittelbare oder unmittelbare Verbindung zwischen der Aufstellplatte für das Auffanggefäß und der elektrischen Heizeinrichtung benutzte. Dies bedeutet, daß in Abhängigkeit von dem jeweils benutzten Auffanggefäß ein bestimmter Abstand zwischen dem elektrischen Heizer und der Aufstellplatte für den Boden des Auffanggefäßes eingehalten werden mußte. Auf diese Weise ist es zwar grundsätzlich möglich, das angesprochene Problem zu lösen. Jedoch sind die bisher vorgeschlagenen Lösungsmittel zu aufwendig.

Der Erfindung liegt die Aufgabe zugrunde, hier Abhilfe zu schaffen und eine Einrichtung vorzuschlagen, die wohlfeil hergestellt werden kann und die sich praktisch ohne Veränderung des jeweiligen Gerätes zum Bereiten heißer Getränke, wie Kaffe, Tee od.dgl. einsetzen läßt. Sie soll ferner mit einfachen Mitteln die Wärmeübertragung von der elektrischen Heizeinrichtung des Gerätes zum Boden des Auffanggefäßes regeln.

Dieses Ziel ist erfindungsgemäß dadurch erreicht, daß der elektrischen Heizeinrichtung ein den Abstand zwischen ihrer Oberfläche und der Aufstellfläche vergrößernder Distanzhalter zugeordnet ist, der einen seine Lage im Bezug auf die Heizeinrichtung sichernden Halteteil aufweist. Ein solcher Distanzhalter wird dann der elektrischen Heizeinrichtung zugeordnet, wenn auf die Aufstellplatte des Gerätes ein Auffanggefäß gestellt wird, das vor zu großer Wärmezufuhr geschützt werden muß. Auf der anderen Seite kann der Distanzhalter auch ohne weiteres fortgelassen werden und zwar dann, wenn beabsichtigt ist, dem herzustellenden Gerät ein solches Auffanggefäß zuzuordnen, dessen Boden auch eine höhere Wärmezufuhr verträgt. Man hat es somit in der Hand, bei der Herstellung ein und desselben Gerätes durch Hinzufügen oder Weglassen des Distanzhalters eine Anpassung an das jeweils zu benutzende Auffanggefäß herbeizuführen. Dies macht sich insbesondere dann vorteilhaft bemerkbar, wenn die Geräte in einer Fertigstraße hergestellt werden. Der Halteteil gewährleistet dabei die Lagesicherung des Distanzhalters.

Bei der bevorzugten Ausführungsform der Erfindung weist der Distanzhalter einen ringförmigen Bereich und einen winklig dazu liegenden geraden Bereich auf, an dessen Ende der Halteteil angeordnet ist.

Eine besonders wohlfeile Ausführungsform ergibt sich, wenn nach einem weiteren Vorschlag der Erfindung als Distanzhalter ein einstückiger Drahtabschnitt verwendet wird. Bei dieser Ausführungsform kann der Distanzhalter aus einem abgelängten Drahtstück gefertigt werden, das aus einer zunächst geraden Lage in die vorstehend angegebene Form des Distanzhalters umgebogen wird. Dabei ist es somit lediglich erforderlich, aus dem geraden, auf Länge geschnittenen Drahtabschnitt zunächst den ringförmigen Hauptteil zu bilden, um danach das eine Ende des Drahtabschnittes zunächst radial nach innen zurückzubiegen, um - schließlich im Bereich des freien Endes ebenfalls durch Biegen das Halteteil zu erzeugen. Es sind somit lediglich Biegevorgänge durchzuführen. Um eine kontinuierliche Herstellung des Distanzhalters zu ermöglichen, Werden Drahtrollen benutzt, von denen dann nacheinander die einzelnen Drahtabschnitte abgetrennt werden, die dann unter Benutzung von Folgewerkzeugen in ihre endgültige Form als Distanzhalter überführt werden. In aller Regel werden dabei metallische Werkstoffe eingesetzt.

Dabei empfiehlt es sich, den geradlinig verlaufenden Teilbereich radial zum ringförmigen Bereich anzuordnen und den Halteteil im Mittelpunkt des ringförmigen Bereiches liegen zu lassen.

Es empfiehlt sich, den Halteteil senkrecht zur Grundebene des Distanzhalters anzuordnen und ihn in eine Ausnehmung der elektrischen Heizeinrichtung eingreifen zu lassen. Dadurch läßt sich die gewünschte Verbindung zwischen den genannten Teilen durch einfaches Einstecken herbeiführen. Dabei ist die Verwendung einer im Querschnitt kreisförmigen Ausnehmung der elektrischen Heizeinrichtung vorteilhaft, an dessen Begrenzungswandungen Abstützbereiche des Halteteiles des Distanzhalters anliegen. Auf diese Weise wird mit einfachen Mitteln eine Sicherung des Distanzhalters gegen Querverschiebung erreicht, ohne daß dazu zusätzliche Befestigungselemente erforderlich sind. Das Einführen des Halteteiles in die Ausnehmung erfolgt durch einfaches Einstecken. Man kann dabei den gegenseitigen Abstand der Schenkel des Abstützbereiches dem Durchmesser der Ausnehmung in der elektrischen Heizeinrichtung anpassen.

Auf der Zeichnung ist die Erfindung in einem Ausführungsbeispiel dargestellt und zwar zeigen:

Fig 1 in Seitenansicht, teilweise weggebrochen und teilweise gestrichelt wiedergegeben, ein erfindungsgemäßes Gerät zum Bereiten von heißen Getränken, wie Kaffee, Tee od.dgl.,

Fig. 2 in Draufsicht die elektrische Heizeinrichtung des Gerätes gemäß der Fig. 1,

Fig. 3 teilweise im Schnitt, teilweise in Ansicht den erfindungsgemäßen Distanzhalter, der zur Verwendung bei einem Gerät gemäß der Fig. 1 bestimmt ist,

Fig. 4 eine Draufsicht des Distanzhalters gemäß der Fig. 3 der Zeichnung,

Fig. 5 in Seitenansicht, teilweise im Schnitt und teilweise weggebrochen, ein Gerät zum Bereiten heißer Getränke, wie Kaffee od.dgl., bei dem die Oberfläche der Heizeinrichtung unmittelbar an einer Aufstellplatte anliegt, auf deren gegenüberliegenden anderen Seite der Boden eines Auffanggefäßes unmittelbar abgestützt ist und

Fig. 6 eine der Fig. 5 entsprechende Darstellung des Gerätes zum Zubereiten von Kaffee, bei der jedoch zwischen der Aufstellplatte und der Oberfläche der Heizeinrichtung ein erfindungsgemäßer Distanzhalter eingefügt ist und bei einer von der Fig. 5 abweichenden Ausführungsform des auf der Aufstellplatte stehenden Auffanggefäßes.

Es sei zunächst erwähnt, daß in den Figuren der Zeichnungen nur diejenigen Teile eines Gerätes zum Zubereiten heißer Getränke, wie Kaffee, Tee od.dgl. dargestellt sind, welche für das Verständnis der Erfindung Bedeutung haben. So sind die meisten Teile der elektrischen Einrichtung sowie der Regel-und Steuereinrichtungen des Gerätes fortgelassen, Alle in den Zeichnungen nicht wiedergegebenen Teile können eine an sich bekannte Ausbildung und in ebenfalls bekannter Weise mit dem Gehäuse einer Kaffeemaschine oder eines Teeautomaten verbunden oder im Gehäuseinneren angeordnet sein.

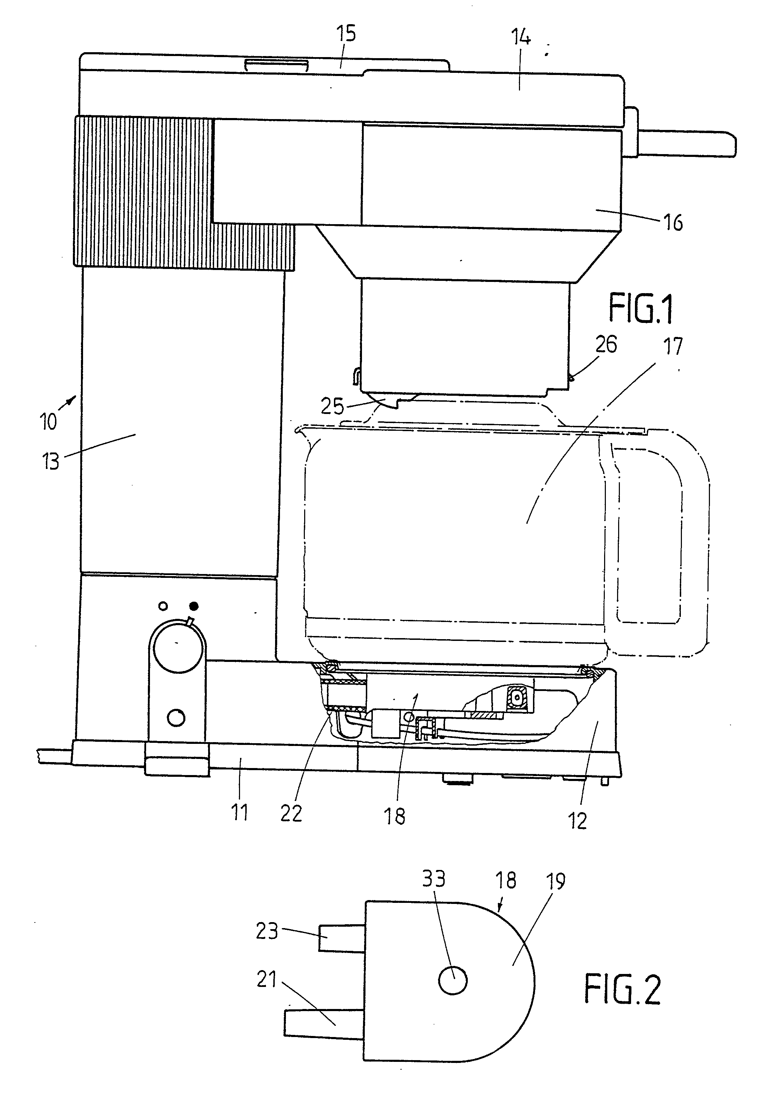

Den gewählten Ausführungsbeispielen ist eine generell mit 10 bezeichnete Kaffeemaschine zugrunde gelegt, die ein Gehäuse aufweist, das unter Benutzung einer Bodenplatte 11 auf einer Aufstellfläche, wie einem Tisch, steht. Oberhalb der Bodenplatte 11 befindet sich ein Sockel 12, der einen großen Hohlraum zur Unterbringung der elektrischen Heizung und der Regel-und Steuereinrichtungen aufweist. Auf der einen Seite geht der Sockel 12 in eine nicht näher gekennzeichnete Verlängerung über, an die sich nach oben hin ein Frischwasserbehälter 13 anschließt, in welchen das Frischwasser eingefüllt wird, das zum Zubereiten des heißen Getränkes, beispielsweise des Kaffees benutzt werden kann. Oberhalb des Frischwasserbehälters hat die Kaffeemaschine 10 eine Abdeckung 14, die parallel zum Sockel 12 bzw. zur Bodenplatte 11 verläuft und die in ihrem rückwärtigen Teil einen Deckel 15 aufweist, durch den die Einfüllöffnung für das Frischwasser abgedeckt ist. Innerhalb des Frischwasserbehälters 13 ist ein in der Zeichnung nicht sichtbares Steigrohr vorhanden, das in Höhe der Abdeckung 14 in ein Querrohr übergeht, das einen Auslaß aufweist, der oberhalb eines Brühgefäßes 16 angeordnet ist. Innerhalb dieses Brühgefäßes 16 befindet sich ein in der Fig. 1 nicht sichtbarer Filter, der zur Aufnahme einer Filtertüte dient, in welche in bekannter Weise Kaffeemehl eingebracht wird, das zum Aufbrühen von Kaffee dient. Das den Filter umgebende zylindrische Gehäuse dient zur Lagerung einer an sich bekannten und generell mit 25 bezeichneten Verschlußeinrichtung. Diese ist schwenkbar gelagert. Zur Lagerung dient ein Lager 26, das in der Fig. 1 schematisch dargestellt ist. Die Verschlußeinrichtung 25 wirkt mit einer Feder und einem Ventilglied zusammen, derart, daß die Feder das Verschlußglied bzw. das Ventil bei entferntem Auffanggefäß in der geschlossenen Lage hält, so daß jegliches Ausfließen von Flüssigkeit und auch ein Nachtropfen verhindert ist.

Wenn jedoch - wie in der Fig. 1 - ein in strichpunktierten Lagen eingezeichneter Glaskrug 17 unter das Brühgefäß 16 geführt wird, dann kommt dessen oberer Bereich mit einer Steuerfläche der Verschlußeinrichtung 25 in Wirkverbindung und verschwenkt die Verschlußeinrichtung 25 um das Lager 26 nach oben und zwar entgegen der Wirkung der nicht dargestellten Belastungsfeder. Dadurch kommt das Verschlußglied in seine Öffnungslage und das fertige Getränk kann in den aus Glas gefertigten Auffangbehälter, also in den Glaskrug 17, fließen. Dieser steht mit seinem nicht näher bezeichneten Boden - wie aus der Fig. 5 der Zeichnung ersichtlich - unmittelbar auf einer Aufstellplatte 24 des Sockels 12. Unterhalb dieser Aufstellplatte ist in dem Hohlraum des Sockels 12 die generell mit 18 bezeichnete elektrische Heizeinrichtung angeordnet, die im gewählten Ausführungsbeispiel als Durchlauferhitzer gestaltet ist. Die eine Leitung das Durchlauferhitzers ist dabei mit 22 bezeichnet. Da sowohl die Ausbildung des Durchlauferhitzers als auch seine Verbindung mit den zugeordneten Teilen bekannt ist, erübrigen sich weitere Detailangaben. Es sei jedoch erwähnt, daß dieelektrische Heizeinrichtung 18 einen Grundkörper 19 hat, in dessen Mitte eine Ausnehmung 33 von kreisförmigem Querschnitt angeordnet ist. Mit 21 ist dabei der Eingangsstutzen der elektrischen Heizeinrichtung bezeichnet. Dieser stehtmit dem Frischwasserbehälter in bekannter Weise in Verbindung. Mit 33 ist demgegenüber der Ausgangsstutzen der elektrischen Heizeinrichtung gekennzeichnet, der in nicht dargestellter Weise mitdem Steigrohr der Kaffeemaschine 10 zusammenwirkt (Fig. 2).

Wie in der Fig. 5 der Zeichnung wiedergegeben, liegt die Oberfläche der elektrischen Heizeinrichtung 18 unmittelbar an der inneren Wandung der Aufstellplatte 34 an, so daß damit ein direkter Wärmeübergang von der elektrischen Heizung zur Aufstellplatte 34 und von dort zum Boden des Glaskruges 17 herbeigeführt worden ist.

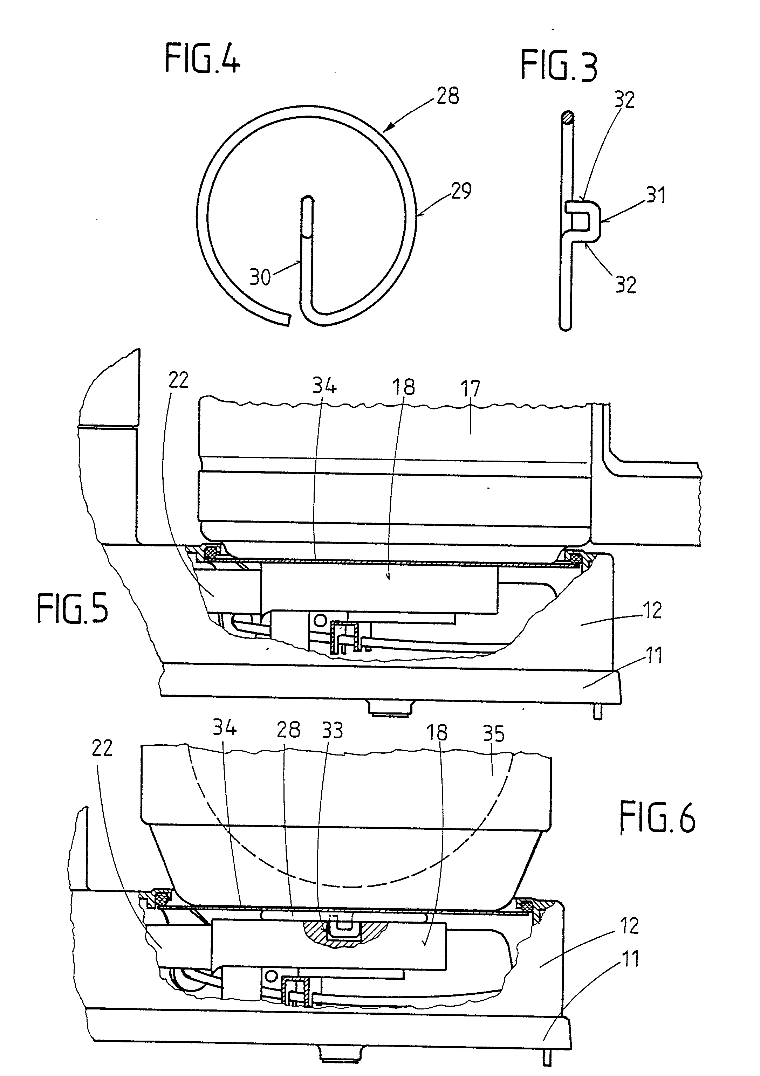

Soll dagegen der Boden eines Auffanggefäßes, z.B. einer Thermoskanne 35, vor einer zu starken Wärmeübertragung geschützt werden, so wird gemäß Fig. 6 der Zeichnung erfindungsgemäß ein Distanzkörper 28 zwischen die Oberfläche der elektrischen Heizeinrichtung 18 und die Innenwand der Aufstellplatte 34 gelegt. Dadurch entfällt eine große Wärmeübertragungsfläche, vielmehr ist die zur direkten Wärmeübertragung vorhandene Fläche nunmehr sehr klein geworden. Dies folgt aus der in den Fig. 3 und 4 der Zeichnung ersichtlichen Ausbildung des Distanzhalters 28. Dadurch wird somit ein Abstand zwischen der Aufstellplatte 34 und der Oberfläche der Heizeinrichtung geschaffen. Dieser ist vom Durchmesser des benutzten Drahtes des Distanzhalters 28 abhängig.

Im gewählten Ausführungsbeispiel ist der Distanzhalter 28 nämlich einstückig aus einem drahtförmigen Werkstoff hergestellt. Die Herstellung kann dabei derart erfolgen, daß zunächst von einer Vorratsrolle eines Drahtes von vorgegebener Querschnittsgröße ein die gewünsch te Länge aufweisendes Stück abgetrennt wird, aus dem dann zunächst der ringförmige Teil 29 gebogen wird. Das eine Ende dieses Drahtstückes wird dann radia nach innen abgewinkelt und zwar so, daß der am Ende dieses abgewinkelten Teiles 30 befindliche Halteteil 31 etwa in der Mitte des ringförmigen Teiles 29 liegt. Dabei wird der Halteteil, wie die Fig. 3 der Zeichnung am besten erkennen läßt, so abgewinkelt, daß er eine im Querschnitt U-förmige Gestalt aufweist. Es ergeben sich somit zwei in Abstand voneinander angeordnete Abstützbereiche 32, die die Außenflächen der Schenkel des U's bilden. Der gegenseitige Abstand dieser beiden Abstützbereiche 32 ist so bemessen, daß der Halteteil 31 ohne Schwierigkeiten in die Ausnehmung 33 der elektrischen Heizeinrichtung 18 eingesteckt werden kann, so wie dies dieFig. 6 der Zeichnung veranschaulicht. Daraus ergibt sich, daß eine Querverschiebung des Halteteiles 31 und damit des gesamten Distanzhalters 28 quer zur Oberfläche des elektrischen Heizeinrichtung 18 ausgeschlossen ist. Eine Bewegung des Distanzhalters 28 nach oben wird dadurch verhindert, daß der Distanzhalter 28 an der Innenwand der Aufstellplatte 34 anliegt. In strichpunktierten Linien ist in der Fig. 6 mit 35 ein als Thermoskanne od.dgl. ausgebildeter Auffangbehälter wiedergegeben, von dem allerdings der Einfachheit halber nur ein Teil des Bodens wiedergegeben ist. Der Distanzhalter 28 wird im übrigen immer dann benutzt, wenn es darum geht, ein Auffanggefäß vor einer zu großen Wärmemengenübertragung zu schützen.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Dies gilt insbesondere für die Ausbildung des Distanzhalters 28, seines Halteteiles 31 und der mit letzterem zusammenwirkenden Ausnehmung 33 in der elektrischen Heizeinrichtung 18. Anstelle der kreisförmigen Ausbildung des Grundkörpers 29 des Distanzhalters 18 kann dieser auch mehreckig, z.B. dreieckig, quadratisch, rechteckig oder ähnlich gestaltet sein. In Abhängigkeit von der Ausbildung des Halteteiles 31 muß dann auch die Ausbildung der Ausnehmung 33 in der elektrischen Heizeinrichtung 18 verändert werden. Nur ist dabei darauf zu achten, daß einmal ein einfaches Einstecken des Halteteiles des Distanzhalters in die Ausnehmung erfolgen soll und daß somit zum anderen zusätzliche Befestigungsmittel zur Lagesicherung des Distanzhalters entfallen sollen.

Bezugszeichenliste :

10 - Kaffeemaschine
11 - Bodenplatte
12 - Sockel
13 - Frischwasserbehälter
14 - Abdeckung
15 - Deckel
16 - Brühgefäß
17 - Auffangbehälter (Glaskrug)
18 - elektrische Heizeinrichtung (Durchlauferhitzer)
19 - Grundkörper (von 18)
21 - Eingangsstutzen
22 - Leitung
23 - Ausgangsstutzen
28 - Distanzhalter
29 - ringförmiger Teil (von 28)
30 - abgewinkelter Teil (von 28)
31 - Halteteil (von 28)
32 - Abstützbereich (von 31)
33 - Ausnehmung
34 - Aufstellplatte
35 - Auffangbehälter (Thermoskanne)

**Ansprüche**

1. Gerät zum Bereiten heißer Getränke, wie Kaffee, Tee od.dgl., mit einem Gehäuse zur Unterbringung oder Lagerung eines Frischwasserbehälters, einer elektrischen Heizeinrichtung, insbesondere in Form eines Durchlauferhitzers für das Wasser, einem Steigrohr zum Weiterleiten des erhitzten Wassers, einem Filter zur Aufnahme einer Filtertüte für das Kaffeemehl od.dgl. und mit wahlweise zu benutzenden Auffanggefäßen, wie Glaskrug, Thermoskanne od.dgl., das auf einer Aufstellplatte aufstellbar ist, unterhalb der die elektrische Heizeinrichtung liegt,

**dadurch gekennzeichnet,**

daß der elektrischen Heizeinrichtung (18) ein den Abstand zwischen ihrer Oberfläche und der Aufstellplatte (34) vergrößernder Distanzhalter (28) zugeordnet ist, der einen seine Lage in Bezug auf die Heizeinrichtung (18) sichernden Halteteil (31) aufweist.

2. Gerät nach Anspruch 1, dadurch gekennzeichnet, daß der Distanzhalter (28) einen ringförmigen Bereich (29) und einen winklig dazu liegenden geraden Bereich (30) aufweist, an dessen Ende der Halteteil (31) angeordnet ist.

3. Gerät nach Anspruch 1 und 2, dadurch gekennzeichnet, daß der Distanzhalter (28) ein einstückiger Drahtabschnitt ist.

4. Gerät nach einem oder mehreren der vorangehenden Ansprüche, dadurch gekennzeichnet, daß der geradlinig verlaufende Teilbereich (30) radial zum ringförmigen Bereich angeordnet ist und daß der Halteteil (31) im Mittelpunkt des ringförmigen Bereiches (29) liegt.

5. Gerät nach einem oder mehreren der vorangehenden Ansprüche, dadurch gekennzeichnet, daß der Halteteil (31) senkrecht zur Grundebene des Distanzhalters (28) angeordnet ist und in eine Ausnehmung (33) der elektrischen Heizeinrichtung (18) eingreift.

6. Gerät nach Anspruch 5, gekennzeichnet durch die Verwendung einer im Querschnitt kreisförmigen Ausnehmung (33) der elektrischen Heizeinrichtung (18), an dessen Begrenzungswandungen Abstützbereiche (32) des Halteteiles (31) des Distanzhalters (28) anliegen.

0 288 684

FIG.1

FIG.2

Fa. Robert Krups Stiftung & Co KG

FIG.4

FIG.3

28

29

30

32

31

32

FIG.5

22    34    18    17

12

11

FIG.6

34  28  33    18    35

22

12

11

Robert Krups Stiftung & Co KG